# FASCICULE DE BREVET EUROPEEN

(11) **EP 0 469 976 B1**
(45) Date de publication et mention de la délivrance du brevet: **08.03.1995**
(21) Numéro de dépôt: 91402109.2
(22) Date de dépôt: 29.07.1991
(51) Int. Cl.: B29C 43/40, B29C 43/34, B29D 31/00

(54) **Procédé et machine automatique de fabrication d'anneaux calibrés à partir d'un extrudat filé ou profilé**
Verfahren und automatische Vorrichtung zur Herstellung kalibrierter Ringe aus profiliertem oder unprofiliertem Extrudat
Process and automatic machine for the production of calibrated rings from a profiled or non-profiled extrudate

(30) Priorité: 03.08.1990 FR 9009942
(43) Date de publication de la demande: 05.02.1992
(73) Titulaire: EROPOL FINANCE ET DEVELOPPEMENT, F-78540 Vernouillet (FR)
(72) Inventeur: Figuereo, Blaise François, F-78510 Triel-sur-Seine (FR)
(74) Mandataire: Lordonnois, Michel

(56) Documents cités:
- DE-A- 3 709 354
- FR-A- 1 183 001
- FR-A- 1 463 250
- FR-A- 2 086 522
- GB-A- 1 486 608
- US-A- 3 246 065
- US-A- 3 717 058
- US-A- 4 159 829
- US-A- 4 239 245
- PATENT ABSTRACTS OF JAPAN vol. 7, no. 37 (M-193)(1182) 15 Février 1983 & JP-A-57 188 335 ( AKIRA WASHIDA ) 19 Novembre 1982
- PATENT ABSTRACTS OF JAPAN vol. 8, no. 191 (M-322)(1628) 4 Septembre 1984 & JP-A-59 081 123 ( TOYOTA JOSHIDA K.K. ) 10 Mai 1984

## Description

La présente invention se rapporte à un procédé et à une machine automatique de fabrication d'anneaux calibrés à partir d'un extrudat filé ou profilé et, plus particulièrement, elle concerne un tel procédé et une machine adaptés pour la réalisation de joints annulaires calibrés, notamment des joints toriques normalisés ou spéciaux, ainsi que des joints et des bagues annulaires ayant une conformation circulaire, ou suivant une autre géométrie, et une section de forme filée quelconque ou une section profilée de configuration particulière et, en fait, selon leur destination d'application, une section quelconque pouvant être donnée à un extrudat obtenu en utilisant une tête d'extrusion conçue par l'inventeur et faisant l'objet du brevet FR-A-2 589 652, ayant pour titre: "Machine d'extrusion simultanée de plusieurs matières", note étant prise que suite à l'utilisation de cette machine, les joints annulaires, toriques et bagues annulaires précités peuvent être constitués, à la demande, en utilisant une seule matière ou plusieurs matières différentes et incorporer une armature fibreuse ou autre et/ou être pourvus d'une âme formant un noyau central en toute matière choisie suivant l'action à laquelle cette âme est destinée.

Dans la technique connue actuellement pour la fabrication de joints ou bagues annulaires de section ronde ou autre, on utilise divers procédés de moulage et de vulcanisation, par exemple des procédés de moulage sous pression ou par injection, par lesquels on obtient, à la sortie du dispositif de moulage et de vulcanisation, des joints et bagues présentant des bavures correspondant à l'emplacement de la fermeture des empreintes intérieures des moules et une opération d'ébavurage très complexe et longue à réaliser, et de ce fait onéreuse, est nécessaire pour obtenir le surfaçage parfait et le calibrage désirés de ces joints et bagues annulaires.

Cette opération d'ébavurage est reconnue comme un inconvénient majeur de ces procédés connus pour la fabrication de joints, en particulier lorsqu'il s'agit de joints toriques. De plus, dans le moulage par injection par exemple, il est presque impossible d'obtenir une partaite homogénéité de la matière utilisée et, en outre, on ne peut pas réaliser des joints incorporant plusieurs matières et, en particulier, des matières fibreuses uniformément réparties dans toute la masse de ceux-ci.

En conséquence, c'est un des principaux buts de la présente invention d'éliminer la majeure partie des inconvénients présentés par ces procédés connus de fabrication de joints annulaires, ou similaires, en utilisant, selon la présente invention, un procédé inconnu jusqu'à ce jour qui est mis en oeuvre directement à la sortie d'une tête d'extrusion débitant un extrudat en continu, filé ou profilé, à la section désirée pour les joints ou bagues annulaires à fabriquer, ce procédé par extrusion assurant que la ou les matières utilisées seront parfaitement homogènes, et fibrées si on le désire, dans toute la masse de l'extrudat et, par suite, dans toute la masse des joints ou des bagues.

Un autre but de la présente invention est d'éliminer l'opération connue d'ébavurage après démoulage, cette opération étant maintenant faite directement dans le moule, selon ce nouveau procédé.

Les caractéristiques du préambule de la revendication 1 se rapportant à un tel procédé sont connues du document US-A-4 159 829.

D'une manière générale, le procédé conforme à la présente invention est remarquable par le fait qu'il consiste à vulcaniser superficiellement, pour le rendre préhensible, l'extrudat filé ou profilé à la configuration de la section du joint ou bague annulaire à réaliser et débité verticalement en continu à la sortie d'une tête d'extrusion, puis à sectionner en continu cet extrudat, devenu préhensible par précuisson superficielle, en tronçons de longueur correspondant à la circonférence moyenne du joint ou bague désiré au moyen d'un dispositif de coupe conique fournissant à chaque tronçon, en position verticale, une extrémité en pointe conique et son extrémité opposée en forme d'entonnoir de même conicité, puis à amener en position horizontale et à mettre sous forme d'ébauche annulaire, dans un plan vertical, chaque tronçon et à rabouter, à chaud et sous une pression contrôlée, ses extrémités de manière à obtenir une liaison concentrique de jointoiement de celles-ci et fournir ainsi une ébauche de joint ou bague, puis à faire basculer cette ébauche dans une des demi-empreintes de moulage d'un moule en position ouverte incorporant dans un logement de chacun de ses deux éléments de châssis une demi-empreinte de moulage montée de manière mobile et sur ressort dans son logement, puis à refermer ces deux éléments de châssis de moule afin d'emprisonner l'ébauche, sous compression des ressorts, entre les demi-empreintes mobiles et de la vulcaniser par chauffage du moule pendant un temps déterminé, ensuite, après vulcanisation, à faire agir un dispositif de poussée incorporé dans un des éléments de châssis de moule en commandant la mobilité de l'ensemble des deux demi-empreintes afin de produire une action de cisaillement des bords latéraux des logements de ces dernières sur les bavures de l'ébauche pincée entre ces bords et, enfin, de faire provoquer l'ouverture des deux éléments de châssis de moule après avoir fait basculer ce dernier sens dessus-dessous afin d'extraire par gravité, ou au besoin par action du dispositif de poussée, le joint ou bague réalisée parfaitement calibrée et nette superficiellement.

Comme on doit le comprendre aisément de cette définition du procédé conforme à la présente invention, ladite pression exercée sur les extrémités de l'ébauche lors de leur raboutage précis, c'est-à-dire lors de leur jointoiement, est parfaitement contrôlable, si bien qu'il est possible de produire, lors de l'extrusion sous forte pression, une ébauche qui ne perdra rien de ses qualités lors de ce jointoiement de ses extrémités si celui-ci est réalisé sous la même forte pression.

De plus, ce procédé, qui peut être dit "d'extrusion-moulage", présente un sérieux avantage par rapport aux procédés antérieurs utilisant seulement le moulage, du fait que la matière ou le mélange de matières mis en oeuvre pour réaliser l'ébauche est homogène et se trouve transformé presque immédiatement en pièce finie.

La machine automatique conçue pour la mise en oeuvre de ce procédé de fabrication, notamment de joints ou bagues annulaires, est remarquable par le fait qu'elle comprend, installés à la suite les uns des autres et montés pour coopérer entre eux à partir d'une tête d'extrusion débitant un extrudat verticalement, plusieurs dispositifs qui sont constitués d'un dispositif de précuisson assurant une vulcanisation superficielle de l'extrudat qui le traverse verticalement et comportant à sa sortie un dispositif de coupe conique se déplaçant à la même vitesse que l'extrudat et sectionnant un tronçon d'extrudat qui est pris en charge verticalement par un dispositif de préhension entraîné en rotation pas-à-pas et qui amène ce tronçon en position horizontale sur un dispositif de mise en forme d'ébauche annulaire du tronçon d'extrudat et adapté pour opérer, à chaud, un jointoiement concentrique et sous pression contrôlée des extrémités de ce tronçon qui constitue alors une ébauche de joint ou de bague positionnée dans un plan vertical, ce dernier dispositif étant également adapté pour basculer cette ébauche dans une demi-empreinte de moulage d'un moule de vulcanisation situé horizontalement en position ouverte et constitué de deux éléments de châssis articulés l'un sur l'autre, incorporant chacun une demi-empreinte supportée élastiquement et mobile verticalement, ce moule faisant partie d'une série de moules associés à la suite les uns des autres sous forme d'un transporteur sans fin se déplaçant en pas-à-pas et passant dans un portique de fermeture sous compression et de verrouillage de chacun des mornes renfermant une ébauche, ce portique étant suivi, à une distance déterminée et réglable pour assurer la vulcanisation des ébauches pendant le temps de parcours en pas-à-pas de chacun des moules fermés sur cette distance, par un dispositif de poussée adapté pour agir sur un élément de piston incorporé dans l'élément de châssis inférieur de chaque moule et relié solidairement à la demi-empreinte inférieure de celui-ci si bien que l'action de poussée déplace l'élément de piston ainsi que l'ensemble des demi-empreintes de manière ascendante par rapport aux bords des logements de celles-ci qui pincent les bavures d'ébauche entre eux, provoquant de ce fait le cisaillement de ces bavures à l'intérieur de chaque moule fermé avant qu'il ne parvienne à un dispositif de commande d'ouverture des éléments de moule, situé de manière à agir sur chaque moule alors qu'il se trouve renversé en position sens dessus-dessous lors du trajet inférieur de retour du transporteur, ce dernier dispositif étant également adapté pour agir sur ledit organe de l'élément de châssis inférieur de moule afin d'extraire le joint ou la bague réalisée ainsi que les bavures cisaillées, si ce joint ou cette bague ne tombe pas par simple gravité, sur un tapis transporteur installé sous ce dispositif.

De manière plus spécifique et selon l'invention, le dispositif de coupe conique est constitué d'une ou plusieurs lames de coupe agencées en pente descendante de manière convergente vers l'axe vertical de l'extrudat et se resserrant en se déplaçant vers le bas à la même vitesse que celle de l'extrudat afin de sectionner des tronçons de celui-ci présentant chacun une extrémité en pointe conique et l'autre extrémité en cavité conique de même conicité, ce dispositif étant conçu pour que les lames s'escamotent en retour rapide à leur point initial de départ après l'opération de coupe.

Par ailleurs, le dispositif de préhension de chaque tronçon d'extrudat est constitué par une étoile, de préférence à huit branches, fonctionnant en rotation au pas-à-pas en fonction du débit de ces tronçons et dont chaque branche porte à son extrémité libre une paire de mâchoires de préhension adaptée pour pincer chaque tronçon d'extrudat, vulcanisé superficiellement, se présentant en position verticale et relâcher son pincement lorsque la rotation au pas-à-pas de l'étoile a amené ce tronçon en position horizontale et que celui-ci est pris en charge par les mâchoires de préhension du dispositif de mise en forme d'ébauche annulaire.

De manière plus spécifique, on doit noter que ce dispositif de préhension de chaque tronçon d'extrudat a ses branches distribuées deux par deux en forme de V dont l'angle d'ouverture est réglable afin de pouvoir écarter ou rapprocher les paires de mâchoires portées par ses extrémités libres en fonction de la longueur du tronçon d'extrudat et afin que les extrémités de celui-ci dépassent extérieurement de ces mâchoires de manière suffisante pour être saisies ultérieurement par les mâchoires du dispositif de mise en forme d'ébauche annulaire du tronçon d'extrudat.

D'autre part et de manière similaire au dispositif de préhension, ce dispositif de mise en forme d'ébauche annulaire de chaque tronçon d'extrudat comporte deux bras oscillants, associés en forme de V et dont l'angle d'ouverture est réglable suivant la longueur du tronçon d'extrudat, portant chacun à leur extrémité libre une paire de mâchoires montées de manière pivotante, ces mâchoires étant conçues et commandées pour saisir les extrémités du tronçon d'extrudat qui dépassent extérieurement des mâchoires des bras de l'étoile supportant ce tronçon lorsque ces dernières mâchoires s'ouvrent et s'effacent, suite à la rotation d'un pas de l'étoile, alors que les mâchoires des deux bras oscillants pivotent sur elles-mêmes vers l'intérieur afin d'amener les extrémités du tronçon d'extrudat en regard l'une de l'autre pendant que les bras se referment pour que ce tronçon prenne une forme de boucle pendante et jusqu'à ce que l'extrémité en pointe conique du tronçon s'engage et s'applique sous pression et à chaud dans l'autre extrémité en entonnoir de celui-ci afin de réaliser un jointoiement parfaitement concentrique, le tronçon étant alors sous forme d'une ébauche annulaire de joint ou de bague annulaire désirée.

De plus, ce dispostif de mise en forme d'ébauche annulaire de chaque tronçon d'extrudat est adapté pour assurer le basculage et la mise en position horizontale de chaque ébauche dans la demi-empreinte de moulage de l'élément de châssis inférieur d'un moule du transporteur présenté en position ouverte et situé en face de ce dispositif.

De manière plus spécifique et selon un mode de réalisation de l'invention, l'élément de châssis supérieur de chacun des moules incorpore, montée de manière mobile verticalement dans un logement annulaire, une demi-empreinte de moulage soumise à la contrainte descendante d'un ressort de compression situé entre le fond du logement et sa face de dessus pourvue d'une collerette extérieure adaptée pour buter sur un rebord intérieur du logement annulaire qui empêche ainsi l'éjection de cette demi-empreinte sous la poussée du ressort. En ce qui le concerne, l'élément de châssis inférieur de chacun des moules incorpore une bague intérieure dans laquelle est engagée de manière à pouvoir coulisser verticalement dans un logement annulaire dont l'entrée correspond à celle du logement de l'élément supérieur, une demi-empreinte de moulage qui est rendue solidaire, au moyen de vis traversant le fond du logement annulaire d'un élément de piston inférieur qui est engagé verticalement dans un alèsage borgne axial et inférieur à la bague intérieure et repoussée par un ressort de compression situé dans le fond de cet alèsage borgne, cet agencement d'élément de piston, vis et demi-empreinte inférieure étant tel que, lorsque le moule est fermé et que l'on exerce une action de poussée ascendante sur l'élément de piston, les vis commandent le coulissement ascendant dans son logement de la demi empreinte inférieure qui agit de la même manière sur la demi-empreinte supérieure, laquelle s'enfonce dans son logement en comprimant son ressort supérieur si bien que, dans ce déplacement ascendant de l'ensemble des demi-empreintes, cet ensemble agit à la manière d'une cisaille par rapport aux bords des logements supérieur et inférieur qui pincent entre eux les bavures d'extrudat si bien que celles-ci se trouvent cisaillées à l'intérieur du moule.

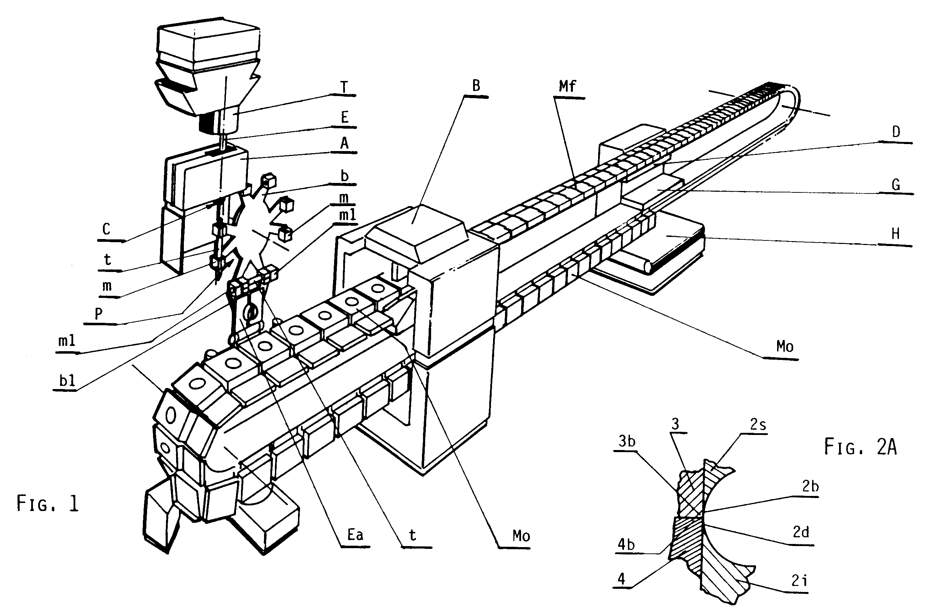

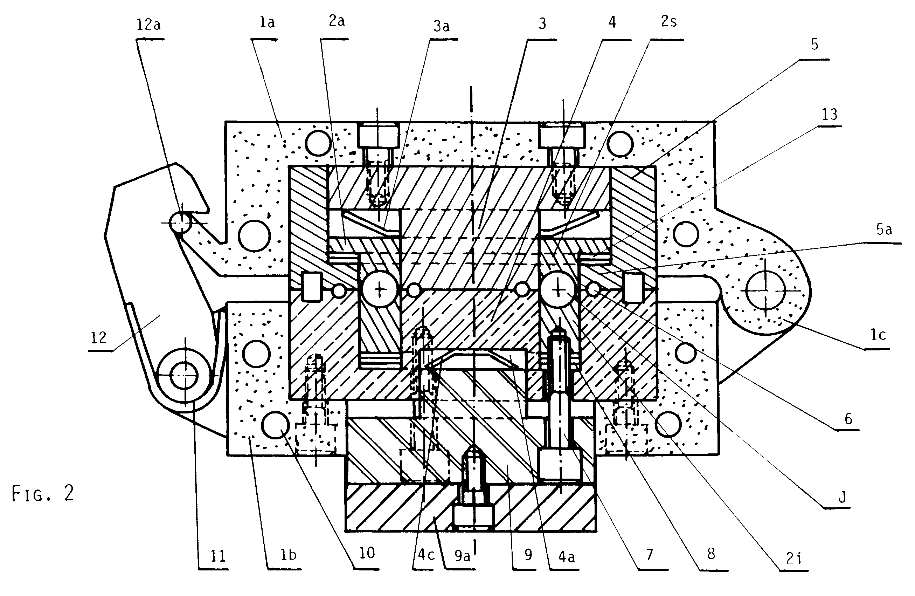

D'autres caractéristiques de la présente invention apparaîtront de la description suivante d'un mode de réalisation de l'ensemble d'une machine et d'un moule donné à titre d'exemple non limitatif et représenté schématiquement dans les dessins ci-joints dans lesquels:
- la figure 1 est une vue schématique en perspective de l'ensemble d'une machine automatique mettant en oeuvre le procédé conforme à l'invention;
- la figure 2 est une vue en coupe transversale prise sur un moule, en position de fermeture, conçu pour réaliser un anneau circulaire, notamment un joint torique; et
- la figure 2A est une vue de détail des bords coopérants, en position de fermeture, des deux demi-empreintes et des éléments de châssis supérieur et inférieur du moule;
Comme on le remarque dans la figure 1, la machine représentée dans son ensemble comprend, installés à la suite les uns des autres et adaptés pour coopérer entre eux, plusieurs dispositifs qui sont constitués d'un dispositif d'extrusion comportant une tête d'extrusion (T) débitant verticalement en continu un extrudat filé rond (E), un dispositif de précuisson (A) constitué par un four traversé verticalement par l'extrudat afin que celui-ci subisse une vulcanisation superficielle le rendant préhensible, un dispositif de coupe conique (C) situé à la sortie du four et qui sectionne l'extrudat en tronçons en se déplaçant à la même vitesse que lui, un dispositif de préhension (P) à la verticale de chaque tronçon (t) d'extrudat fonctionnant en rotation au pas-à-pas et adapté pour amener chaque tronçon (t) en position horizontale, un dispositif (Ea) de mise en forme d'ébauche annulaire de chaque tronçon (t) amené en position horizontale par le dispositif de préhension (P) adapté pour opérer à chaud un jointoiement concentrique et sous pression contrôlée des extrémités du tronçon ainsi que pour basculer à plat chaque ébauche dans la demi empreinte inférieure de moulage d'un moule en position ouverte (Mo), une série de moules de vulcanisation reliés entre eux consécutivement par une articulation pour constituer un transporteur linéaire sans fin fonctionnant en déplacement pas-à-pas, un dispositif (B) constitué par un portique de fermeture sous compression et de verrouillage en position fermée de chaque morne (Mf) contenant une ébauche annulaire, un dispositif de poussée (D) situé à une distance déterminée du dispositif (B) pour assurer le temps de vulcanisation et adapté pour agir sur un élément de piston inférieur à chaque moule afin de provoquer l'ébavurage interne au moule du joint ou bague annulaire réalisé, un dispositif (G) de commande d'ouverture de moule (Mf) situé pour agir sur chaque moule lorsque celui-ci est en position renversée sens dessus-dessous dans le trajet inférieur de retour du transporteur, et enfin, un tapis transporteur (H) transversal situé en dessous et à l'aplomb du dispositif (G) pour évacuer le joint ou bague réalisée qui tombe par gravité lors de l'ouverture de chaque moule, ainsi que les bavures cisaillées.

Le dispositif de coupe conique (C) est constitué d'une ou plusieurs lames de coupe agencées en pente descendante de manière convergente vers l'axe vertical de l'extrudat (E) et se resserrant en se déplaçant vers le bas à la même vitesse que celle de l'extrudat afin de sectionner des tronçons (t) de celui-ci présentant chacun une extrémité en pointe conique et l'autre extrémité en cavité conique de même conicité, ce dispositif étant conçu pour que les lames s'escamotent en retour rapide à leur point initial de départ après l'opération de coupe.

Le dispositif de préhension (P) de chaque tronçon d'extrudat (t) est constitué par une étoile, de préférence à huit branches (b), fonctionnant en rotation au pas-à-pas en fonction du débit de ces tronçons et dont chaque branche porte à son extrémité libre une paire de mâchoires (m) de préhension adaptée pour pincer chaque tronçon d'extrudat (t), vulcanisé superficiellement, se présentant en position verticale et relâcher son pincement lorsque la rotation au pas-à-pas de l'étoile a amené ce tronçon en position horizontale et que celui-ci est pris en charge par les mâchoires (m1) de préhension du dispositif (Ea) de mise en forme d'ébauche annulaire.

Comme on le remarque dans la figure 1, le dispositif (Ea) de mise en forme d'ébauche annulaire de chaque tronçon d'extrudat (t) comporte deux bras oscillants (b1), associés en forme de V dont l'angle d'ouverture est réglable en fonction de la longueur du tronçon (t) et portant chacun à leur extrémité libre une paire de mâchoires (m1) montées de manière pivotante. Ces mâchoires (m1) sont conçues et commandées pour saisir les extrémités du tronçon d'extrudat (t) qui dépassent extérieurement des mâchoires (m) des bras (b) de l'étoile supportant ce tronçon lorsque ces dernières mâchoires (m) s'ouvrent et s'effacent, suite à la rotation d'un pas de l'étoile, alors que les mâchoires (m1) des deux bras oscillants pivotent sur elles-mêmes vers l'intérieur afin d'amener les extrémités du tronçon d'extrudat (t) en regard l'une de l'autre pendant que les bras (b1) se referment pour que ce tronçon prenne une forme de boucle pendante et jusqu'à ce que l'extrémité en pointe conique du tronçon s'engage et s'applique sous pression et à chaud dans l'autre extrémité en entonnoir de celui-ci afin de réaliser un jointoiement parfaitement concentrique.

Comme on peut le remarquer de la figure 2, chaque moule est constitué en deux éléments de châssis supérieur (1a) et inférieur (1b) reliés d'un côté par une charnière (1c) et, du côté opposé, par un dispositif de verrouillage en position de fermeture constitué par un verrou basculant (12) supporté par l'élément inférieur (1b) et contraint dans le sens de son déclenchement, d'une partie saillante (12a) de l'élément supérieur (1a) par un ressort de torsion en épingle (11).

L'élément de châssis supérieur (1a) est transpercé transversalement par des logements (10) de cartouche de chauffage et incorpore un bloc épaulé axial (3) entouré par une bague (5) pourvue d'un rebord intérieur (5a) qui définissent entre eux un logement annulaire dans lequel est engagé, de manière coulissante verticalement, une demi-empreinte (2s) supérieure de moulage contrainte par une rondelle ressort (3a) de compression et comportant une collerette extérieure (2a) adaptée pour s'appuyer sur le rebord (5a) de la bague (5), afin que ses bords d'empreinte (2b) soient au même niveau que le bord inférieur du rebord (5a) et le bord de la face inférieure du bloc axial 3, comme on le voit au mieux en détail dans la figure 2A. A noter que pour parfaire la mise à niveau de ces bords précités on peut utiliser des rondelles de calage (13) situées entre le côté inférieur de la collerette (2a) et le côté supérieur du rebord (5a).

L'élément de châssis inférieur (1b) est également transpercé transversalement par des logements (10) de cartouches de chauffage et incorpore une bague (4), réalisée en une seule pièce, et pourvue d'un logement annulaire dans lequel est engagée, de manière coulissante verticalement, une demi-empreinte (2i) inférieure de moulage fixée solidairement par des vis (7) à un élément de piston (9) inférieur, engagé dans un alèsage borgne (4a) inférieur et axial à la bague (4), cet élément de piston étant soumis à la contrainte d'une rondelle ressort (4c) de compression logée dans le fond de l'alèsage borgne et comportant une plaque inférieure (9a) rapportée adaptée pour subir l'appui d'un organe de poussée particulier (non représenté) incorporé dans le dispositif (D) du transporteur de moules. En outre, la demi-empreinte inférieure (2i) est réglée en position par des rondelles (8) placées au fond de son logement afin que ses bords d'empreinte (2d) soient au même niveau que les bords supérieurs (4b) de son logement, comme on le voit au mieux en détail dans la figure 2A.

A noter que l'élément de châssis supérieur (1a) et l'élément de châssis inférieur (1b) sont pourvus, situées en regard les unes des autres et de part et d'autre des demi-empreintes, de rainures annulaires (6) adaptées pour recevoir les bavure de l'ébauche de joint (J) lors de la fermeture des éléments de châssis de moule et de la vulcanisation.

On comprend facilement de la description qui précède que, lorsque l'on désire réaliser l'ébavurage du joint (J), vulcanisé à l'intérieur du moule, il suffit de pousser de manière ascendante l'élément de piston (9) afin que, par l'intermédiaire des vis (7), l'ensemble des demi-empreintes soit repoussé et coulisse vers le haut en comprimant la rondelle ressort (3a) et en opérant ainsi une action de cisaillement par rapport aux bords (3b, 4b) pinçant entre eux les bavures d'ébauche qui se trouvent ainsi cisaillées avant l'ouverture ultérieure du moule.

## Revendications

1. Procédé de fabrication notamment de joints ou bagues annulaires en partant d'un extrudat filé ou profilé débité en continu par une tête d'extrusion, de préférence du type à distribution circulaire contrôlée et permettant l'extrusion simultanée de plusieurs matières, procédé dans lequel l'extrudat, filé ou profilé à la configuration de la section du joint ou bague annulaire à réaliser et débité verticalement en continu à la sortie d'une tête d'extrusion (T), est sectionné en tronçons de longueur correspondant à la circonférence moyenne du joint ou bague désiré, chaque tronçon étant ensuite mis sous forme d'ébauche annulaire, avec ses extrémités raboutées à chaud et sous une pression contrôlée, puis chaque ébauche étant basculée dans un moule où elle se trouve vulcanisée, par chauffage de ce dernier, pendant un temps déterminé, ce procédé étant caractérisé par le fait que l'extrudat, immédiatement à la sortie de l'extrudeuse, est vulcanisé superficiellement pour le rendre préhensible avant de le sectionner en tronçons(t) au moyen d'un dispositif de coupe (C) qui fournit à chaque tronçon une extrémité en pointe conique et son extrémité opposée en forme d'entonnoir de même conicité afin que, lors du raboutage à chaud de ces extrémités, une liaison concentrique de jointoiement de celles-ci soit obtenue pour chaque ébauche annulaire ainsi formée, laquelle est ensuite couchée dans une des demi-empreintes de moulage d'un moule (Mo) en position ouverte incorporant dans un logement de chacun de ses deux éléments de châssis une demi-empreinte de moulage montée de manière élastique sur ressort dans son logement, puis à refermer ces deux éléments de châssis de moule afin d'emprisonner l'ébauche, sous compression des ressorts, entre les demi-empreintes mobiles et de la vulcaniser par chauffage du moule puis, après le temps déterminé de vulcanisation, à faire agir un dispositif de poussée incorporé dans un des éléments de châssis de moule en commandant la mobilité de l'ensemble des deux demi-empreintes afin de produire une action de cisaillement des bords latéraux des logements de ces dernières sur les bavures de l'ébauche pincées entre ces bords et, enfin, de faire provoquer l'ouverture des deux éléments de châssis de morne après avoir fait basculer ce dernier sens dessus-dessous afin d'extraire par gravité, ou au besoin par action sur le dispositif de poussée incorporé, le joint (J) ou bague réalisé parfaitement calibré, nette et lisse superficiellement.

2. Machine automatique pour la mise en oeuvre du procédé selon la revendication 1, comportant plusieurs dispositifs, installés en série et adaptés pour coopérer entre eux, et dont le premier est constitué par une tête d'extrusion (T) débitant verticalement en continu un extrudat filé rond (E), cette machine étant caractérisée par le fait qu'à la sortie de la tête d'extrusion (T) est situé un dispositif de précuisson (A) constitué par un four traversé verticalement par l'extrudat afin que celui-ci subisse une vulcanisation superficielle le rendant préhensible, lequel dispositif est suivi par un dispositif de coupe conique (C), situé à la sortie du four et qui sectionne l'extrudat en tronçons (t), chaque tronçon étant pris en charge verticalement par un dispositif de préhension (P) fonctionnant dans un plan vertical en rotation au pas-à-pas et adapté pour amener chaque tronçon (t) en position horizontale à un dispositif (Ea) de mise en forme d'ébauche annulaire de chaque tronçon (t) adapté pour opérer à chaud le jointoiement concentrique et sous pression contrôlée des extrémités en pointe conique et en cavité conique du tronçon ainsi que pour basculer à plat chaque ébauche dans la demi empreinte inférieure de moulage d'un moule en position ouverte (Mo) faisant partie d'une série de moules de vulcanisation reliés entre eux consécutivement par une articulation pour constituer un transporteur linéaire sans fin fonctionnant en déplacement pas-à-pas, chaque moule étant adapté pour entrer en position ouverte dans un dispositif (B) constitué par un portique de fermeture sous compression et de verrouillage en position fermée de chaque moule (Mf) contenant une ébauche annulaire, ce portique étant suivi par un dispositif de poussée (D) situé à une distance déterminée de lui pour assurer le temps de vulcanisation et étant adapté pour agir sur un élément de piston inférieur à chaque moule afin de provoquer l'ébavurage interne au moule du joint ou bague annulaire réalisé, cette machine comportant en outre un dispositif (G) de commande d'ouverture de moule (Mf) situé pour agir sur chaque moule lorsque celui-ci est en position renversée sens dessus-dessous dans le trajet inférieur de retour du transporteur, et enfin, un tapis transporteur (H) transversal situé en dessous et à l'aplomb du dispositif (G) pour évacuer le joint ou bague réalisée qui tombe par gravité lors de l'ouverture de chaque moule, ainsi que les bavures cisaillées.

3. Machine selon la revendication 2, dans laquelle le dispositif de coupe conique (C) se déplace verticalement vers le bas à la même vitesse que celle de l'extrudat caractérisée par le fait que ce dispositif de coupe conique (C) est constitué d'une ou plusieurs lames de coupe agencées en pente descendante de manière convergente vers l'axe vertical de l'extrudat (E) et agencées pour se resserrer en descendant afin de sectionner des tronçons (t) d'extrudat présentant chacun une extrémité en pointe conique et l'autre extrémité en cavité conique de même conicité, ce dispositif étant conçu pour que les lames s'escamotent pendant leur retour rapide de montée à leur point initial de départ après l'opération de coupe conique.

4. Machine selon la revendication 2, dans laquelle le dispositif de préhension (P) de chaque tronçon d'extrudat (t) est constitué par une étoile, de préférence à huit branches (b), fonctionnant en rotation au pas-à-pas en fonction du débit de ces tronçons et dont chaque branche porte à son extrémité libre une paire de mâchoires (m) de préhension, caractérisée par le fait que cette étoile est montée dans un plan vertical et que chaque paire de mâchoires est adaptée pour pincer chaque tronçon d'extrudat (t), vulcanisé superficiellement, se présentant en position verticale et relâcher son pincement lorsque la rotation au pas-à-pas de l'étoile a amené ce tronçon en position horizontale et que celui-ci est pris en charge par les mâchoires (m1) de préhension du dispositif (Ea) de mise en forme d'ébauche annulaire.

5. Machine selon la revendication 4, caractérisée par le fait que le dispositif de préhension (P) a ses branches (b) distribuées deux par deux en forme de V dont l'angle d'ouverture est réglable afin de pouvoir écarter ou rapprocher les paires de mâchoires portées par ses extrémités libres en fonction de la longueur du tronçon d'extrudat (t) et afin que les extrémités de celui-ci dépassent extérieurement de ces mâchoires (m) de manière suffisante pour être saisies ultérieurement par les mâchoires (m1) du dispositif (Ea) de mise en forme d'ébauche annulaire du tronçon d'extrudat.

6. Machine selon la revendication 2, caractérisée par le fait que le dispositif (Ea) de mise en forme d'ébauche annulaire de chaque tronçon d'extrudat (t) comporte deux bras oscillants (b1), associés en forme de V dont l'angle d'ouverture est réglable en fonction de la longueur du tronçon (t) et portant chacun à leur extrémité libre une paire de mâchoires (m1) montées de manière pivotante.

7. Machine selon la revendication 6, dans laquelle les mâchoires (m1) des deux bras oscillants du dispositif (Ea) de mise en forme d'ébauche annulaire pivotent sur elles-mêmes vers l'intérieur afin d'amener les extrémités du tronçon d'extrudat (t) en regard l'une de l'autre pendant que les bras (b1) se referment pour que ce tronçon prenne une forme de boucle pendante et jusqu'à ce que l'extrémité en pointe conique du tronçon s'engage et s'applique sous pression et à chaud dans l'autre extrémité en entonnoir de celui-ci afin de réaliser un jointoiement parfaitement concentrique, caractérisée par le fait que les mâchoires (m1) des branches de ce dispositif (Ea) sont conçues et commandées pour saisir les extrémités du tronçon d'extrudat (t) qui dépassent extérieurement des mâchoires (m) des bras (b) de l'étoile supportant ce tronçon lorsque ces dernières mâchoires (m) s'ouvrent et s effacent, suite à la rotation d'un pas de l'étoile.

8. Machine selon la revendication 2, dans laquelle l'élément de châssis supérieur (1a) de chaque moule incorpore, montée de manière mobile verticalement dans un logement annulaire, une demi-empreinte de moulage (2s), caractérisée par le fait que cette demi-empreinte de moulage est soumise à la contrainte descendante d'un ressort de compression (3a) situé entre le fond du logement et sa face de dessus pourvue d'une collerette extérieure (2a) adaptée pour buter sur un rebord intérieur (5a) du logement annulaire qui empêche ainsi l'éjection de cette demi-empreinte sous la poussée du ressort.

9. Machine selon l'une ou l'autre des revendications 2 et 8, caractérisée par le fait que l'élément de châssis inférieur (1b) de chaque morne incorpore une bague intérieure (4) dans laquelle est engagée de manière à pouvoir coulisser verticalement dans un logement annulaire dont l'entrée correspond à celle du logement de l'élément supérieur (1a), une demi-empreinte de moulage (2i) qui est rendue solidaire, au moyen de vis (7) traversant le fond du logement annulaire d'un élément de piston (9) inférieur qui est engagé verticalement dans un alèsage borgne (4a) axial et inférieur à la bague intérieure (4) et repoussée par un ressort de compression (4c) situé dans le fond de cet alèsage borgne.

## Claims

1. Process for manufacturing in particular annular rings or seals from an extruded or profiled extrudate continuously delivered by an extrusion head, preferably of the type with controlled circular distribution and enabling a plurality of materials to be extruded simultaneously, in which process the extruded or profiled extrudate having the configuration of the section of the annular ring or seal to be produced and delivered vertically and continuously at the outlet of an extrusion head (T) is cut into portions of lengths corresponding to the average circumference of the desired ring or seal, each portion then being shaped as an annular blank with its ends butted together in the hot state and under controlled pressure, then each blank being tipped into a mould in which it is vulcanized, by heating of the latter, for a predetermined amount of time, this process being characterized in that, immediately on leaving the extruder, the extrudate is superficially vulcanized to render it such that it can be gripped before being cut into portions (t) by means of a cutting device (C) which provides each portion with an end in the form of a conical tip and its opposite end in the form of a funnel with the same degree of conicity such that, when these ends are butted together in the hot state, a concentric jointing connection thereof is produced for each annular blank formed in this manner, which is then laid in one of the half-moulds of a mould (Mo) in the open position incorporating in a housing of each of its two frame elements a half-mould resiliently spring-mounted in its housing, then to close these two mould frame elements so as to trap the blank, under spring compression, between the movable half-moulds and so as to vulcanize it by heating the mould then, after the predetermined vulcanizing time, in causing a thrust device incorporated in one of the mould frame elements to act by controlling the mobility of the assembly of the two half-moulds in order to produce a shearing action of the side edges of the housings of the latter on the mould seams of the blank squeezed between these edges and, finally, to cause the two mould frame elements to open after tipping the mould upside-down in order to extract the seal (J) or ring, which is produced such that it is perfectly calibrated, clean and smooth on the surface, by gravity or, if necessary, by acting on the incorporated thrust device.

2. Automatic machine for performing the process according to Claim 1, comprising a plurality of devices, mounted in series and adapted so as to cooperate with one another, and of which the first consists of an extrusion head (T) delivering vertically and continuously a round extruded extrudate (E), this machine being characterized in that at the outlet of the extrusion head (T) is located a pre-curing device (A) consisting of an oven through which the extrudate passes vertically such that it undergoes superficial vulcanization rendering it such that it can be gripped, which device is followed by a conical cutting device (C) which is located at the outlet of the oven and which cuts the extrudate into portions (t), each portion being taken up vertically by a gripping device (P) operating in a vertical plane and rotating in a step-wise manner and adapted so as to bring each portion (t) in a horizontal position to a device (Ea) for shaping it in the form of an annular blank and adapted so as to bring about the concentric jointing of the portion ends with a conical tip and with a conical cavity in the hot state and under controlled pressure and so as to tilt each blank flat into the lower half-mould of a mould in the open state (Mo) forming part of a series of vulcanizing moulds connected to one another consecutively by articulations so as to form an endless linear conveyor operating in step-wise displacement, each mould being adapted so as to enter in the open position a device (B) consisting of a gantry which can close each mould (Mf) containing an annular blank under compression and lock it in the closed position, this gantry being followed by a thrust device (D) located at a specific distance therefrom in order to guarantee the vulcanizing time and being adapted so as to act on a piston element below each mould in order to bring about the deburring inside the mould of the annular ring or seal produced, this machine further comprising a device (G) for controlling the opening of the mould (Mf) disposed so as to act on each mould when it is in the upturned position on the lower return path of the conveyor, and, finally a transverse conveyor belt (H) located below and perpendicular to the device (G) for evacuating the seal or ring produced which falls by gravity when each mould is opened, as well as the sheared-off burrs.

3. Machine according to Claim 2, in which the conical cutting device (C) moves vertically downwards at the same speed as that of the extrudate, characterized in that the conical cutting device (C) consists of one or more cutting blades arranged in a descending slope converging towards the vertical axis of the extrudate (E) and arranged so as to move close as they descend in order to cut the portions (t) of extrudate, each having one end in the form of a conical tip and the other end in the form of a conical cavity with the same degree of conicity, this device being designed such that the blades retract as they return rapidly upwards to their initial starting point after the conical cutting operation.

4. Machine according to Claim 2, in which the device (P) for gripping each portion (t) of extrudate consists of a star, preferably with eight branches (b), which operates in step-wise rotation as a function of the delivery of these portions and of which each branch carries at its free end a pair of gripping jaws (m), characterized in that this star is mounted in a vertical plane; and in that each pair of jaws is adapted to squeeze each portion (t) of superficially vulcanized extrudate which is presented in the vertical position and release the squeezing effect when the step-wise rotation of the star has brought this portion into the horizontal position; and in that this portion is taken up by the gripping jaws (m1) of the device (Ea) for shaping the annular blank.

5. Machine according to Claim 4, characterized in that the branches (b) of the gripping device (P) are distributed in pairs in a V-shape of which the aperture angle is adjustable so as to be able to move away or bring closer the pairs of jaws carried at its free ends as a function of the length of the portion (t) of extrudate and such that the ends thereof project externally beyond these jaws (m) sufficiently to be grasped subsequently by the jaws (m1) of the device (Ea) for shaping the portion of extrudate in the form of an annular blank.

6. Machine according to Claim 2, characterized in that the device (Ea) for shaping each portion (t) of extrudate in the form of annular blank comprises two oscillating arms (b1) which are joined in a V-shape of which the aperture angle can be adjusted as a function of the length of the portion (t) and each bearing at its free end a pair of pivotably mounted jaws (m1).

7. Machine according to Claim 6, in which the jaws (m1) of the two oscillating arms of the device (Ea) for shaping the annular blank pivot about themselves towards the interior so as to bring the ends of the portion (t) of extrudate opposite one another whilst the arms (b1) close such that this portion assumes the shape of a pendant loop and until the portion end with a conical tip engages and is applied under pressure and in the hot state in the other, funnel-shaped portion end so as to produce a perfectly concentric jointing, characterized in that the jaws (m1) of the branches of this device (Ea) are designed and controlled so as to grasp the ends of the portion (t) of extrudate which project externally beyond the jaws (m) of the branches (b) of the star supporting this portion when these latter jaws (m) open and move aside when the star has rotated one step.

8. Machine according to Claim 2, in which the upper frame element (1a) of each mould incorporates a half-mould (2s) mounted in a vertically movable manner in an annular housing, characterized in that this half-mould is subjected to the descending stress of a compression spring (3a) located between the base of the housing and its top face provided with an outer collar (2a) adapted so as to abut an inner edge (5a) of the annular housing which thus prevents this half-mould being ejected under the thrust of the spring.

9. Machine according to either of Claims 2 and 8, characterized in that the lower frame element (1b) of each mould incorporates an inner ring (4) in which engages, such that it can slide vertically in an annular housing of which the inlet corresponds to that of the housing of the upper element (1a), a half-mould (2i) which is rendered integral, by means of screws (7) passing through the base of the annular housing, with a lower piston element (9) which is vertically engaged in an axial blind bore (4a) below the inner ring (4) and is pushed back by a compression spring (4c) located in the base of this blind bore.

## Patentansprüche

1. Verfahren zur Herstellung von insbesondere Abdichtungsringen oder O-Ringen aus einem unprofilierten oder profilierten Extrudat, das kontinuierlich durch einen Spritzkopf, vorzugsweise des Typs mit gesteuerter kreisförmiger Versorgung, der die gleichzeitige Extrusion mehrerer Stoffe erlaubt, ausgebracht wird, wobei das gemäß der Konfiguration des Querschnitts des zu fertigenden Abdichtungs- oder O-Ringes unprofilierte oder profilierte und vertikal kontinuierlich am Ausgang eines Spritzkopfes (T) ausgebrachte Extrudat in Teilstücke einer Länge geteilt wird, die dem mittleren Umfang der gewünschten Dichtung oder des Ringes entspricht, wobei jedes Teilstück sodann unter Aneinanderfügung seiner Enden unter Wärmeeinwirkung und unter einem gesteuerten Druck in die Form eines ringförmigen Rohlings gebracht wird, dann jeder Rohling in eine Form gekippt wird, worin er durch deren Erwärmung über eine bestimmte Zeit vulkani siert wird, wobei dieses Verfahren dadurch gekennzeichnet ist, daß das Extrudat unmittelbar am Ausgang des Extruders oberflächlich vulkanisiert wird, um es handhabbar zu machen, bevor es in Teilstücke (t) mittels einer Schneideinrichtung (C) aufgeteilt wird, die jedes Teilstück mit einem konischen Ende und einem entgegengesetzten trichterförmigen Ende derselben Konizität versieht, damit bei der Aneinanderfügung dieser Enden unter Wärmeeinwirkung deren konzentrische Stoßverbindung für jeden so geformten Rohling erzielt wird, der sodann in eine der Formwerkzeughälften einer Form (Mo) in Offenstellung eingebracht wird, die in einer Lagerung jedes ihrer beiden Kastenelemente eine Formwerkzeughälfte aufweist, die federelastisch in ihrer Lagerung angebracht ist, dann diese beiden Formkastenelemente zu schließen, um den Rohling unter Federdruck zwischen den beweglichen Werkzeughälften einzuschließen und sie durch Erwärmung der Form zu vulkanisieren, dann nach der bestimmten Vulkanisierzeit eine in einem der Formkastenelemente eingebaute Schubeinrichtung angreifen zu lassen, indem die Beweglichkeit der Einheit der beiden Werkzeughälften gesteuert wird, um eine Scherwirkung der seitlichen Ränder der Lagerungen dieser letzteren auf die zwischen den Rändern eingeklemmten Rohlingsformgrate zu erzeugen, und schließlich die Öffnung der beiden Kastenelemente der Form nach deren Umkippen in den Kopfstand zu veranlassen, um durch Schwerkraft oder erforderlichenfalls durch die Betätigung der eingebauten Schubeinrichtung die gefertigte, vollständig kalibrierte, saubere und oberflächenglatte Dichtung (J) oder den Ring zu entnehmen.

2. Automatische Vorrichtung zur Durchführung des Verfahrens nach Anspruch 1, umfassend mehrere Einrichtungen, die in Serie installiert und so ausgebildet sind, daß sie zusammenarbeiten können, wobei deren erste aus einem Spritzkopf (T) besteht, der vertikal kontinuierlich ein rundes unprofiliertes Extrudat (E) ausbringt, wobei diese Vor richtung dadurch gekennzeichnet ist, daß am Ausgang des Spritzkopfs (T) eine Vorvulkanisiereinrichtung (A) angeordnet ist, die aus einem vertikal vom Extrudat durchlaufenen Ofen besteht, damit dieses eine es handhabbar machende oberflächliche Vulkanisierung erfährt, wobei dieser Einrichtung eine Einrichtung zum konischen Schneiden (C) folgt, die am Ausgang des Ofens angeordnet ist und das Extrudat in Teilstücke (t) teilt, wobei jedes Teilstück durch eine Greifeinrichtung (P) vertikal übernommen wird, die in einer vertikalen Ebene in schrittweiser Rotation arbeitet und so ausgebildet ist, daß sie jedes Teilstück (t) in horizontaler Position einer Einrichtung (Ea) zur Formung jedes Teilstücks (t) in einen ringförmigen Rohling zuführt zuführt, die so ausgebildet ist, daß sie unter Wärmeeinwirkung und unter gesteuertem Druck die konzentrische Aneinanderfügung der Enden des Teilstücks mit konischer Spitze und konischer Vertiefung bewirkt sowie jeden Rohling flach in die untere Formwerkzeughälfte einer Form (Mo) in Offenstellung schwenkt, die Teil einer Reihe von Vulkanisierformen ist, die fortlaufend miteinander durch ein Gelenk verbunden sind, um einen linearen, endlosen, schrittweise verfahrbaren Förderer zu bilden, wobei jede Form so ausgebildet ist, daß sie in Offenstellung in eine Einrichtung (B) einläuft, die durch eine Brücke zum Verschließen jeder einen ringförmigen Rohling enthaltenden Form (Mf) unter Pressung und zu ihrer Verriegelung in Schließstellung gebildet ist, wobei dieser Brücke eine Schubeinrichtung (D) folgt, die in einem bestimmten Abstand zu ihr angeordnet ist, um die Vulkanisierzeit sicherzustellen, und so ausgebildet ist, daß sie auf ein Kolbenelement unterhalb jeder Form einwirkt, um die Entgratung des gefertigten Dichtungs- oder O-Ringes innerhalb der Form einzuleiten, wobei diese Vorrichtung außerdem eine Einrichtung (G) zur Steuerung der Öffnung der Form (Mf) umfaßt, die so angeordnet ist, daß sie auf jede Form einwirkt, wenn diese in umgekehrter Stellung kopfstehend im unteren Rücklauf des Förderers ist, und schließlich ein Querförderband (H) umfaßt, das unterhalb und senkrecht zur Einrichtung (G) angeordnet ist, um die gefertigte, bei der Öffnung jeder Form durch Schwerkraft herausfallende Dichtung oder den Ring sowie die abgescherten Grate abzuführen.

3. Vorrichtung nach Anspruch 2, bei der die Einrichtung zum konischen Schneiden (C) sich vertikal nach unten mit derselben Geschwindigkeit wie das Extrudat verschiebt, dadurch gekennzeichnet, daß diese Einrichtung zum konischen Schneiden (C) aus einem oder mehreren Schneidmessern besteht, die nach unten geneigt in Richtung zur Vertikalachse des Extrudats (E) konvergierend angeordnet und so angeordnet sind, daß sie sich bei der Abwärtsbewegung verengen, um die Teilstücke (t) des Extrudats zu teilen, die jeweils ein Ende mit konischer Spitze und ein Ende mit konischer Vertiefung derselben Konizität aufweisen, wobei diese Einrichtung so ausgestaltet ist, daß die Messer sich nach dem Vorgang des konischen Schneidens während ihrer schnellen Rückbewegung nach oben auf ihren ur sprünglichen Ausgangspunkt einziehen.

4. Vorrichtung nach Anspruch 2, bei der die Einrichtung (P) zum Greifen jedes Extrudatteilstücks (t) aus einem Stern, vorzugsweise mit acht Armen (b), besteht, der in schrittweiser Rotation in Abhängigkeit von der Ausbringung dieser Teilstücke arbeitet und bei dem jeder Arm auf seinem freien Ende ein Paar Greifklemmbacken (m) trägt, dadurch gekennzeichnet, daß dieser Stern in einer vertikalen Ebene angebracht ist und daß jedes Paar Klemmbacken so ausgebildet ist, daß es jedes oberflächlich vulkanisierte, sich in vertikaler Stellung darbietende Extrudatteilstück (t) einklemmt und seinen Klemmgriff entspannt, wenn die schrittweise Rotation des Sterns dieses Teilstück in horizontale Position überführt hat und dieses durch die Greifklemm backen (m1) dem Einrichtung (Ea) zum Formen eines ringförmigen Rohlings übernommen worden ist.

5. Vorrichtung nach Anspruch 4, dadurch gekennzeichnet, daß jeweils zwei Arme (b) der Greifeinrichtung (P) in Form eines V verteilt sind, dessen Öffnungswinkel einstellbar ist, um die auf ihren freien Enden getragenen Klemmbackenpaare in Abhängigkeit von der Länge des Extrudatteilstücks (t) voneinander entfernen oder einander annähern zu können und damit dessen Enden nach außen über die Klemmbacken (m) genügend vorstehen, um später von den Klemmbacken (m1) der Einrichtung (Ea) zum Formen einres ringförmigen Rohlings aus dem Extrudatteilstück ergriffen zu werden.

6. Vorrichtung nach Anspruch 2, dadurch gekennzeichnet, daß die Einrichtung (Ea) zum Formen eines ringförmigen Rohlings aus jedem Extrudatteilstück (t) zwei hin- und herbewegbare Arme (b1) umfaßt, die in Form eines V verbunden sind, dessen Öffnungswinkel in Abhängigkeit von der Länge des Teilstücks (t) regelbar ist, und von denen jeder auf seinem freien Ende ein Paar schwenkbar angebrachte Klemmbacken (m1) trägt.

7. Vorrichtung nach Anspruch 6, bei der die Klemmbacken (m1) der beiden hin- und herbewegbaren Arme der Einrichtung (Ea) zum Formen eines ringförmigen Rohlings um sich selbst nach innen schwenken, um die Enden des Extrudatteilstücks (t) aufeinanderzuzuführen, während die Arme (b1) sich schließen, damit dieses Teilstück eine Hängeschleifenform annimmt und bis das Teilstückende mit konischer Spitze unter Druck und Erwärmung in das andere, trichterförmige Ende eingreift und sich darin einpaßt, um eine völlig konzentrische Aneinanderfügung zu bewirken, dadurch gekennzeichnet, daß die Klemmbacken (m1) der Arme dieser Einrichtung (Ea) so ausgebildet und gesteuert sind, daß sie die Enden des Extrudatteilstücks (t) ergreifen, die außen über die dieses Teilstück tragenden Klemmbacken (m) der Arme (b) des Sterns vorstehen, während diese letzteren Klemmbacken (m) sich nach der Rotation des Sterns um einen Schritt öffnen und entspannen.

8. Vorrichtung nach Anspruch 2, bei der das obere Kastenelement (1a) jeder Form eine vertikal beweglich in einem Ringlager angebrachte Formwerkzeughälfte (s) aufweist, dadurch gekennzeichnet, daß diese Formwerkzeughälfte der Abwärtsbelastung einer Druckfeder (3a) ausgesetzt ist, die zwischen dem Boden des Lagers und seiner Oberseite angeordnet ist, die mit einem Außenkragen (2a) versehen ist, der so ausgebildet ist, daß er gegen einen Innenrand (5a) des Ringlagers anschlägt, der so das Ausgestoßenwerden dieser Druck werkzeughälfte unter dem Stoß der Feder verhindert.

9. Vorrichtung nach einem der Ansprüche 2 und 8, dadurch gekennzeichnet, daß das untere Kastenelement (1b) jeder Form einen Innenring (4) aufweist, in den, vertikal in einem Ringlager verschiebbar, dessen Eingang dem des Lagers des oberen Elements (1a) entspricht, eine Formwerkzeughälfte (2i) eingreift, die mittels einer den Boden des Ringlagers durchquerenden Schraube (7) fest mit einem unteren, vertikal in eine axiale und unterhalb des Innenrings (4) angeordnete Blindbohrung (4a) eingreifenden Kolbenelement (9) verbunden ist und durch eine im Boden dieser Scheinbohrung angeordnete Druckfeder (4c) zurückgestoßen wird.
